Europäisches Patentamt

(19) European Patent Office

Office européen des brevets

(11) Numéro de publication: **0 093 636
B1**

(12) **FASCICULE DE BREVET EUROPEEN**

(45) Date de publication du fascicule du brevet:
**25.06.86**

(21) Numéro de dépôt: **83400779.1**

(22) Date de dépôt: **20.04.83**

(51) Int. Cl.⁴: **G 01 N 21/88**

(54) Dispositif de détection de défauts sur une pièce.

(30) Priorité: **27.04.82 FR 8207202**

(43) Date de publication de la demande:
**09.11.83 Bulletin 83/45**

(45) Mention de la délivrance du brevet:
**25.06.86 Bulletin 86/26**

(84) Etats contractants désignés:
**BE CH DE FR GB IT LI NL SE**

(56) Documents cités:
**EP - A - 0 040 995
EP - A - 0 050 935
GB - A - 2 044 921
US - A - 3 774 030
US - A - 4 162 405
US - A - 4 284 897**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Vaerman, Jean Fernand, 2, allée des Perce-Neige, F-77240 Vert St Denis (FR)**

(74) Mandataire: **Moinat, François, S.N.E.C.M.A. Service des Brevets Boîte Postale 81, F-91003 Evry Cedex (FR)**

## Description

L'invention concerne un dispositif de détection de défauts sur une pièce par la lecture automatique des indications représentatives des défauts à détecter, données par un liquide qui, sous l'action d'un rayonnement d'une première longueur d'onde réemet un rayonnement d'une seconde longueur d'onde. Il est en effet bien connu, dans les méthodes de contrôle, de matérialiser les défauts des pièces, notamment les fissures et les criques, par un liquide spécial qui, sous l'action d'une lumière, généralement dans la gamme de l'ultraviolet, réemet une lumière visible se situant le plus souvent dans la gamme des couleurs vert-jaune. Ces méthodes bien connues de visualisation des défauts sont dites de ressuage ou magnétoscopique, suivant la méthode utilisée pour obtenir la matérialisation des défauts par le liquide.

Ces méthodes permettent de procéder commodément à un examen visuel des pièces. Il a déjà également été proposé de procéder à un examen automatique des indications données par ces méthodes. A cet effet, il est connu d'utiliser des appareillages qui se composent d'une source monochromatique émettant un fin faisceau ultraviolet qui éclaire, après réflexion sur un miroir séparateur réfléchissant uniquement les rayons ultraviolets et non la lumière visible, la pièce à étudier qui réemet un rayonnement visible, non dévié par le miroir séparateur et capté par un détecteur placé derrière celui-ci. Un tel dispositif est décrit dans le US-A-4284897. Ce dispositif présente l'inconvénient d'utiliser un détecteur omnidirectionnel sans balayage d'analyse.

D'autres dispositifs connus permettent de procéder à une analyse, suivant deux axes, de la surface à examiner, ce qui conduit à déplacer la pièce pendant l'opération et à utiliser un détecteur complexe. Un tel dispositif est décrit par exemple dans le GB-A-2044921.

La présente invention a pour objet un dispositif du genre dans lequel la source monochromatique émet un faisceau focalisé, un jeu de deux miroirs oscillants placés entre le miroir séparateur et la pièce assurant simultanément, d'une part, le balayage de cette dernière suivant deux axes de coordonnées, par le faisceau incident et, d'autre part, l'acheminement sur le détecteur du faisceau de lumière réémise parallèle au faisceau incident.

Le détecteur est suivi d'une chaîne de traitement de données qui reçoit par ailleurs des informations sur la position des miroirs oscillants de manière à délivrer, à chaque instant des informations sur le point de la pièce concerné et sur l'intensité de la lumière réémise en ce point.

Le faisceau incident issu de la source monochromatique sera avantageusement choisi dans l'ultraviolet, la source monochromatique pouvant être un laser ou une lampe à ultraviolets et la lumière réémise étant de la lumière visible.

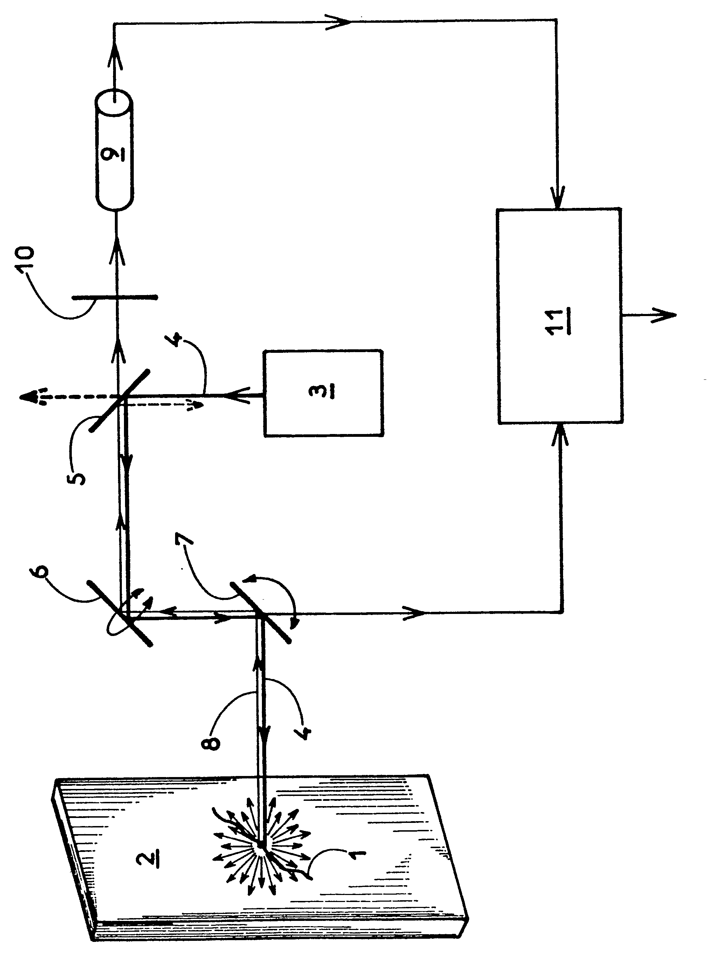

L'invention sera mieux comprise en se référant à la description et à la figure ci-jointes qui illustrent un mode de mise en oeuvre de l'invention.

Dans l'exemple représenté, les défauts 1 de la pièce 2 à étudier sont matérialisés, d'une manière connue, par exemple par la méthode dite de ressuage, au moyen d'un liquide spécial qui, sous l'action de rayons ultraviolets, réemet une lumière fluorescente visible.

Conformément à l'invention, une source 3 émet un faisceau de lumière 4 focalisé dont la longueur l'onde correspond à l'ultraviolet. Cette source 3, qui est de préférence mais non nécessairement monochromatique, est constitué d'un laser ou, plus simplement d'une lampe à ultraviolets.

Le faisceau 4 issu de la source 3 est réfléchi à 90° par un miroir séparateur 5 qui a la propriété de réfléchir les rayons ultraviolets et non la lumière visible.

Après sa réflexion sur le miroir séparateur 5, le rayon 4 est réflechi successivement par deux miroirs oscillants 6 et 7 qui assurent respectivement le balayage suivant deux axes de la pièce 2. Ainsi, la totalité de la surface à examiner est balayée par le faisceau ultraviolet 4.

Lorsque le faisceau ultraviolet 4 rencontre sur la pièce 2 un défaut 1 matérialisé par la présence du liquide, celui-ci réemet, dans toutes les directions, une lumière visible, fluorescente, de couleur jaune-vert. Parmi ces faisceaux de lumière visible réémis en chaque point dans toutes les directions, celui qui est parallèle au faisceau incident est repris successivement par les miroirs oscillants 7 et 6 et dirigé sur le miroir séparateur 5. Mais, ce faisceau 8 étant constitué de lumière visible, il n'est pas réfléchi et traverse ledit miroir séparateur 5 et est reçu par un élément détecteur 9 de type photoélectrique.

Entre le miroir séparateur 5 et l'élément détecteur 9, on peut placer un filtre 10 transmettant la longueur d'onde de la lumière visible réémise et éliminant totalement les rayons ultraviolets résiduels qui pourraient influencer le détecteur et donner de fausses informations.

Les informations du détecteur 9 sont transmises à une chaîne de traitement de données 11 qui reçoit par ailleurs des informations sur la position des miroirs 6 et 7, donc sur le point de la pièce 2 concerné à un instant donné.

On constate que le dispositif de l'invention est relativement simple car, grâce au système de balayage optique utilisé simultanément pour les deux faisceaux, incident et réémis, la pièce, la source et le détecteur peuvent être fixes.

Cet exemple a été décrit en faisant référence à un faisceau incident à ultraviolets et à un faisceau réémis en lumière visible. Il est bien évident que l'invention peut être également mise en oeuvre avec d'autres faisceaux à la seule condition que les longueurs d'ondes soient différentes pour chacun des faisceaux. Ceci dépend uniquement du liquide utilisé pour la matérialisation des défauts, le miroir séparateur étant alors adapté pour réfléchir l'une des longueurs l'onde et pour laisser passer la seconde.

## Revendications

1. Dispositif de détection de défauts sur une pièce (2) par la lecture automatique des indications représentatives des défauts à détecter, données par un liquide qui, sous l'action d'une lumière d'une première longueur d'onde réemet un rayonnement de lumière d'une seconde longueur d'onde, du genre dans lequel une source (3) émet un faisceau (4) de lumière de première longueur d'onde qui éclaire, après réflexion sur un miroir (5) séparateur réfléchissant ladite lumière de première longueur d'onde et non la lumière de seconde longueur d'onde, la pièce (2) á étudier, le faisceau (8) de lumière de seconde longueur d'onde réémis parallèlement au faisceau (4) incident n'étant pas dévié par le miroir (5) séparateur et étant capté par un détecteur (9) placé derrière ledit miroir (5) séparateur, caractérisé en ce que la source émet un faisceau (4) focalisé et en ce qu'un jeu de deux miroirs (6, 7) oscillants, placé entre le miroir (5) séparateur et la pièce (2) assure simultanément, d'une part, le balayage de cette dernière (2), suivant deux axes de coordonnées, par le faisceau (4) de lumière incident et, d'autre part, l'acheminement sur le détecteur (9) du faisceau (8) de lumière réémise parallèlement au faisceau (4) incident, le détecteur (9) étant suivi d'une chaîne (11) de traitement de données qui reçoit par ailleurs des informations sur la position des miroirs (6, 7) oscillants de manière à délivrer, à chaque instant des informations sur le point de la pièce (2) concerné et sur l'intensité de la lumière réémise en ce point.

2. Dispositif de détection de défauts selon la revendication 1, caractérisé en ce que la première longueur d'onde correspond à de la lumière dans l'ultraviolet alors que la seconde longueur d'onde correspond à de la lumière visible.

3. Dispositif de détection de défauts selon l'une des revendications 1 ou 2, caractérisé en ce que entre le miroir (5) séparateur et le détecteur (9) est placé un filtre (10) qui laisse passer la lumière de seconde longueur d'onde et bloque les rayons de première longueur d'onde résiduels.

4. Dispositif de détection de défauts selon l'une des revendications 1 à 3, caractérisé en ce que la source (3) est monochromatique.

5. Dispositif de détection de défauts selon la revendication 4, caractérisé en ce que la source (3) est un dispositif à laser.

6. Dispositif de détection de défauts selon la revendication 4, caractérisé en ce que la source (3) monochromatique est une lampe à ultraviolets.

## Patentansprüche

1. Einrichtung zur Detektion von Fehlern auf einem Werkstück (2) durch automatisches Ablesen von für die zu erfassenden Fehler kennzeichnenden Indikatoren, die mittels einer Flüssigkeit erzeugt werden, welche unter der Einwirkung von Licht einer ersten Wellenlänge eine Lichtstrahlung einer zweiten Wellenlänge zurückstrahlt, wobei eine Quelle (3) ein Lichtstrahlenbündel (4) der ersten Wellenlänge aussendet, das nach Reflektion an einem Strahlenteilerspiegel (5), der nur Licht der ersten Wellenlänge, nicht jedoch Licht der zweiten Wellenlänge zurückwirft, das zu untersuchende Werkstück (2) beleuchtet, und wobei das parallel zu dem einfallenden Lichtstrahlenbündel (4) zurückgestrahlte Lichtstrahlenbündel (8) der zweiten Wellenlänge von dem Strahlenteilerspiegel (5) nicht abgelenkt und von einem hinter dem Strahlenteilerspiegel (5) angeordneten Detektor (9) aufgenommen wird, dadurch gekennzeichnet, dass die Quelle ein fokussiertes Lichtstrahlenbündel (4) aussendet, dass ein Satz aus zwei oszillierenden Spiegeln (6, 7), der zwischen dem Strahlenteilerspiegel (5) und dem Werkstück (2) angeordnet ist, gleichzeitig einerseits das Abtasten des Werkstücks (2) durch das auftreffende Lichtstrahlenbündel (4) längs zweier Koordinatenachsen und andererseits die Führung des parallel zu dem auftreffenden Lichtstrahlenbündel (4) zurückgeworfenen Lichtstrahlenbündel (8) auf den Detektor (9) bewirkt, und dass an den Detektor (9) eine Datenverarbeitungskette (11) angeschlossen ist, der ausserdem Informationen über die Position der oszillierenden Spiegel (6, 7) zugeführt werden, so dass sie (11) in jedem Zeitpunkt Informationen über den betreffenden Punkt des Werkstücks (2) und über die Intensität des in diesem Punkt zurückgestrahlten Lichts liefert.

2. Einrichtung zur Detektion von Fehlern nach Anspruch 1, dadurch gekennzeichnet, dass die erste Wellenlänge einem im ultravioletten Bereich liegenden Licht entspricht, während die zweite Wellenlänge sichtbarem Licht entspricht.

3. Einrichtung zur Detektion von Fehlern nach Anspruch 1 oder 2, dadurch gekennzeichnet, dass zwischen dem Strahlenteilerspiegel (5) und dem Detektor (9) ein für das Licht der zweiten Wellenlänge durchlässiges Filter (10) angeordnet ist, das die Reststrahlen erster Wellenlänge sperrt.

4. Einrichtung zur Detektion von Fehlern nach Anspruch 1 bis 3, dadurch gekennzeichnet, dass die Quelle (3) monochromatisch ist.

5. Einrichtung zur Detektion von Fehlern nach Anspruch 4, dadurch gekennzeichnet, dass die monochromatische Quelle (3) eine Laseranordnung ist.

6. Einrichtung zur Detektion von Fehlern nach Anspruch 4, dadurch gekennzeichnet, dass die monochromatische Quelle (3) eine Ultraviolet-Lampe ist.

## Claims

1. Device for the detection of faults on a workpiece (2) by automatic reading of images, representing the faults to be detected, provided by a liquid which, under the action of light of a first waveband, re-emits light radiation of a second waveband, of the type in which a source (3) emits a beam (4) of light of the first waveband which after reflection in a dividing mirror (5) reflecting said light of the first waveband and not light of the second waveband, is incident on the workpiece (2)

to be examined, the beam (8) of light of the second waveband re-emitted parallel with the incident beam (4) not being deflected by the dividing mirror (5) and being detected by a detector (9) placed behind said dividing mirror (5), characterised in that the source emits a focussed beam (4) and in that a set of two oscillating mirrors (6, 7) placed between the dividing mirror (5) and the workpiece (2), effects simultaneously, on the one hand, the scanning of the latter (2) along two coordinate axes by the incident beam (4) of light and, on the other hand, the direction onto the detector (9) of the beam (8) of light re-emitted parallel with the incident beam (4), the detector (9) being monitored by a data processing string (11) which also receives information on the position of the oscillating mirrors (6, 7) so as to supply, at any given instant, information about the point of the workpiece (2) of interest and on the intensity of light re-emitted at that point.

2. Device for the detection of faults according to claim 1, characterised in that the first waveband corresponds to the ultraviolet band of light whereas the second waveband corresponds to visible light.

3. Device for the detection of faults according to one of claims 1 or 2, characterised in that a filter (10) is inserted between the dividing mirror (5) and the detector (9) the said filter lets through light of the second, waveband and blocks the residual rays of the first waveband.

4. Device for the detection of faults according to one of claims 1 to 3, characterised in that the source (3) is monochromatic.

5. Device for the detection of faults according to claim 4, characterised in that the source (3) is a laser device.

6. Device for the detection of faults according to claim 4, characterised in that the monochromatic source (3) is an ultraviolet lamp.